# EUROPEAN PATENT APPLICATION

(11) **EP 4 765 007 A1**
(43) Date of publication of application: **24.06.2026**
(21) Application number: 24882648.9
(22) Date of filing: 12.09.2024
(51) Int. Cl.: G06Q 50/40, G06Q 50/10, B60L 53/60, B60L 53/80, B60L 58/10, H04L 43/20, H04L 43/0811, H04L 49/00

(54) **BATTERY SWAPPING STATION MANAGEMENT SYSTEM AND NETWORK SYSTEM INCLUDING SAME**

(30) Priority: 23.10.2023 KR 20230142194
(71) Applicant: LG Energy Solution, Ltd., Seoul 07335 (KR)
(72) Inventor: PARK, Heon Il, Daejeon 34122 (KR)
(74) Representative: BCKIP Part mbB
(86) International application number: PCT/KR2024/013932
(87) International publication number: WO 2025/089619

(57) **Abstract**

A battery swapping station (BSS) management system according to an embodiment disclosed in this document may include a connection module connected to a battery pack to monitor a state of the battery pack; and a Software Defined Networking (SDN) controller configured to manage a connection state between the battery pack and the connection module on the basis of data related to the battery pack received from the connection module.

## Description

### [TECHNICAL FIELD]

### CROSS-REFERENCE TO RELATED APPLICATION

This application claims priority to and the benefit of Korean Patent Application No. 10-2023-0142194 filed in the Korean Intellectual Property Office on October 23, 2023, the entire contents of which are incorporated herein by reference.

### TECHNICAL FIELD

An embodiment disclosed in this document relates to a battery swapping station management system and a network system including the same.

### [BACKGROUND ART]

Recently, researches and development on secondary batteries are conducted actively. Here, the secondary batteries are batteries that can be charged and discharged, and mean to include all conventional Ni/Cd batteries and Ni/MH batteries, and recent lithium-ion batteries. The lithium-ion batteries among the secondary batteries are advantageous in that the energy density is much higher than those of the conventional Ni/Cd batteries and Ni/MH batteries. In addition, as the lithium-ion batteries may be manufactured small and lightweight, they are used as a power supply for mobile devices and draw attention recently as a next-generation energy storage medium as the scope of using the batteries has been expanded to power supplies of electric vehicles.

As a service related to these secondary batteries, there is a battery swapping station (BSS). The battery swapping station may provide users with a service of swapping discharged batteries with charged batteries. The battery swapping station is additionally installed in existing buildings such as convenience stores, public institutions, and the like in many cases, and it needs to provide information on each battery swapping station to the users.

### [DISCLOSURE]

### [TECHNICAL PROBLEM]

According to an embodiment disclosed in this document, a management system configured to manage battery swapping stations in real time and a network system including the same are provided.

The technical problems of the embodiments disclosed in this document are not limited to the technical problems mentioned above, and unmentioned other technical problems will be clearly understood by those skilled in the art from the following descriptions.

### [TECHNICAL SOLUTION]

A battery swapping station (BSS) management system according to an embodiment disclosed in this document may comprise: a connection module connected to a battery pack to monitor a state of the battery pack; and a Software Defined Networking (SDN) controller configured to manage a connection state between the battery pack and the connection module on the basis of data related to the battery pack received from the connection module.

According to an embodiment, the SDN controller may communicate with the connection module based on an Open Flow communication protocol.

According to an embodiment, the connection module may include a sensor that monitors the battery pack based on a Linux operating system, wherein the sensor may be configured to be virtualized as a virtual switch (OpenVSwitch) and perform a network switch function between the connection module and the SDN controller.

According to an embodiment, the SDN controller may turn off a sensor corresponding to the connection module, of which the connection is to be restricted, on the basis of the connection state between the connection module and the battery pack.

According to an embodiment, the SDN controller may provide data related to the battery pack connected to the connection module to an external server.

According to an embodiment, the data related to the battery pack may include data related to at least any one among whether the battery pack is connected, the number of times of charging the battery pack, the number of times of renting the battery pack, and a charging state of the battery pack.

According to an embodiment, the SDN controller may determine a priority of the battery pack to be rented to a user on the basis of the data related to the battery pack.

A network system according to an embodiment disclosed in this document may comprise: a management system configured to manage a connection state between a battery swapping station (BSS) and a battery pack connected to the battery swapping station; and a cloud server configured to store data related to the battery pack provided by the management system, wherein the management system may include a Software Defined Networking (SDN) controller.

According to an embodiment, the SDN controller may communicate with a connection module connecting the battery swapping station and the battery pack based on an OpenFlow protocol.

According to an embodiment, the connection module may include a sensor that monitors the battery pack based on a Linux operating system, wherein the sensor may be configured to be virtualized as a virtual switch (OpenVSwitch) and perform a network switch function between the connection module and the controller.

According to an embodiment, the SDN controller may turn off a sensor corresponding to the connection module, of which the connection is to be restricted, on the basis of the connection state between the connection module and the battery pack, and provide data related to the battery pack connected to the connection module to the cloud server.

According to an embodiment, the data related to the battery pack may include data related to at least any one among whether the battery pack is connected, the number of times of charging the battery pack, the number of times of renting the battery pack, and a charging state of the battery pack.

According to an embodiment, data related to the battery pack may be provided to a user through an application (APP) linked to the cloud server.

### [ADVANTAGEOUS EFFECTS]

A battery swapping station management system according to an embodiment disclosed in this document may manage a battery swapping system in real time and communicate with a server.

The effects according to an embodiment disclosed in this document are not limited to the effects mentioned above, and unmentioned other effects may be clearly understood by those skilled in the art according to the disclosure of this document.

### [DESCRIPTION OF DRAWINGS]

FIG. 1 is a view schematically showing a battery swapping station and surrounding configurations according to an embodiment disclosed in this document.
FIG. 2 is a view for explaining a battery swapping station according to an embodiment disclosed in this document.
FIG. 3 is a view for explaining a network system according to an embodiment disclosed in this document.
FIG. 4 is a view for explaining a network system according to an embodiment disclosed in this document.
FIG. 5 is a view for explaining a management system according to an embodiment disclosed in this document.

### [MODE FOR INVENTION]

Hereinafter, embodiments disclosed in this document will be described in detail with reference to exemplary drawings. In assigning reference numerals to the components in each drawing, it should be noted that like components are given like numerals as much as possible although they are shown in different drawings. In addition, in describing embodiments disclosed in this document, when a specific description of a related known configuration or function is determined to hinder understanding of the embodiments disclosed in this document, detailed description thereof will be omitted.

In describing the components of the embodiments disclosed in this document, terms such as first, second, A, B, (a), (b), and the like may be used. These terms are intended only to distinguish the components from other components, and the nature, order, or sequence of the components are not limited by these terms. In addition, unless otherwise defined, all terms used herein, including technical or scientific terms, have the same meaning as generally understood by those skilled in the art. Terms defined in commonly used dictionaries should be interpreted as having a meaning consistent with the meaning they have in the context of the related techniques, and will not be interpreted an ideally or excessively formal sense unless explicitly defined in this application.

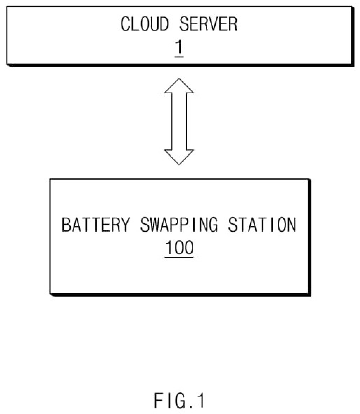

FIG. 1 is a view schematically showing a battery swapping station and surrounding configurations according to an embodiment disclosed in this document.

A battery swapping station (BSS) 10 may be configured to charge at least one battery pack (not shown) acquired from a user, and provide a charged battery pack to the user. In an embodiment, the battery swapping station 10 may be configured to charge a battery pack of a target device having a detachable battery pack, such as an electric vehicle (EV) and/or an electric scooter.

According to an embodiment, the battery pack may include at least one battery module, and each battery module includes at least one battery cell. Here, the battery cell may be a lithium-ion (Li-ion) battery, a lithium-ion (Li-ion) polymer battery, a nickel cadmium (Ni-Cd) battery, a nickel metal hydride (Ni-MH) battery, or the like, but it is not limited thereto.

According to an embodiment, the battery swapping station 10 may be provided and/or installed in a facility that supplies electric power. The battery swapping station 10 may receive the electric power supplied from the facility through a grid. For example, the battery swapping station 10 may be additionally installed in an existing building, such as a convenience store, public institution, or the like, to charge a battery pack on the basis of the electric power supplied from the facility and/or may be directly connected to a new & renewable energy power plant to receive electric power.

The battery swapping station 10 may be connected to an external server. Here, the external server may include a cloud server 1. According to an embodiment, the battery swapping station 10 may be configured to be wiredly and/or wirelessly connected to the cloud server 1 to provide the cloud server 10 with data related to a battery pack that the battery swapping station 10 is charging.

According to an embodiment, data related to a battery pack stored in the cloud server 1 may be provided to a user through a separate application linked to the cloud server 1. For example, the cloud server 1 may be configured to provide information related to the battery pack connected to the battery swapping station 10 to a plurality of users through a user terminal, such as a personal computer (PC) or a smartphone.

According to an embodiment, data related to a battery pack may include data related to at least any one among whether the battery pack is connected to the battery swapping station 10, the number of times of charging the battery pack, the number of times of renting the battery pack, and the charging state of the battery pack.

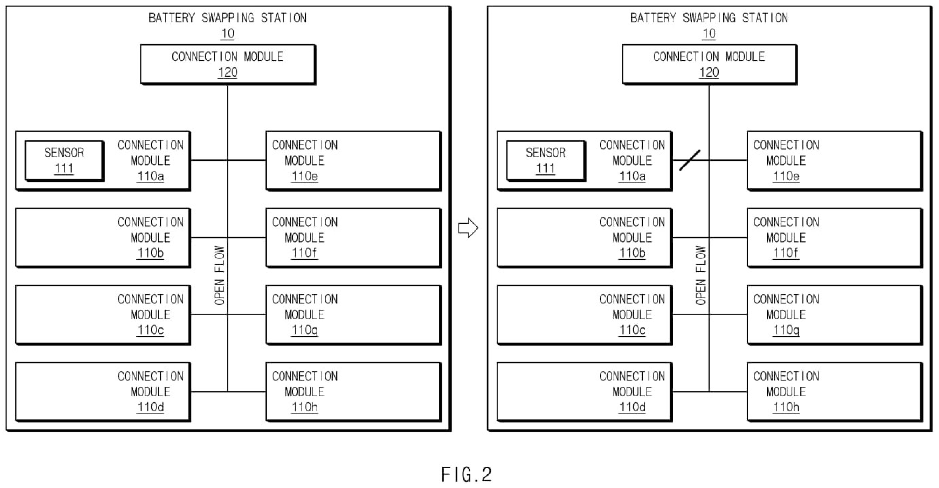

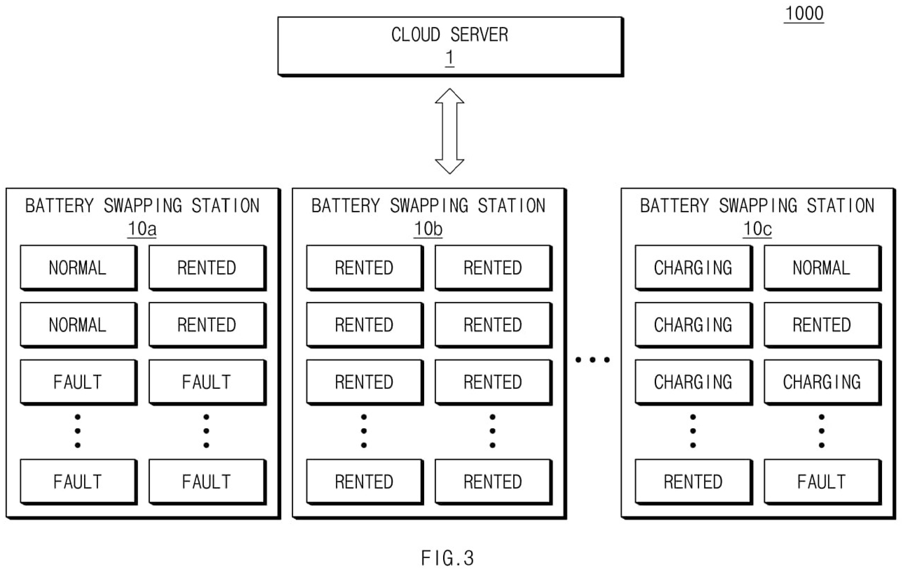

FIG. 2 is a view for explaining a battery swapping station according to an embodiment disclosed in this document, and FIG. 3 is a view for explaining a network system according to an embodiment disclosed in this document.

Referring to FIG. 2, the battery swapping station 10 may include a plurality of connection modules 110a to 110h and a controller 120, and referring to FIG. 3, the network system 1000 may include a cloud server 1 and a plurality of battery swapping stations 10a to 10c interconnected with the cloud server 1. According to an embodiment, each of the battery swapping stations 10a to 10c is shown to have eight connection modules, but it is not limited to this example. In addition, in FIG. 3, it is shown that each of the battery swapping stations 10a to 10c charges eight battery packs, but it is not limited to this example, and each of the battery swapping stations 10a to 10c may be configured to charge n battery packs (n is a natural number).

As described above in the description of FIG. 1, the battery swapping station 10 may be configured to charge at least one battery pack (not shown) acquired from a user and provide charged battery packs to the user. Here, the battery pack may be connected to each of the connection modules 110a to 110h to be charged.

Each of the plurality of connection modules 110a to 110h may include at least one or more sensors 111. According to an embodiment, the sensor 111 may be configured to collect data related to a battery pack (not shown) connected to a connection module 110a. For example, the sensor 111 may be configured to measure temperature, voltage, current, and the like of the battery pack (not shown) connected to the connection module 110a and/or communicate with the battery pack (not shown) wiredly and/or wirelessly.

According to an embodiment, the sensor 111 may be a monitoring sensor that operates based on the Linux operating system.

The controller 120 may control the overall operation of the battery swapping station 10. According to an embodiment, the controller 120 may be implemented as a device such as an industrial computer that controls the overall operation of the battery swapping station 10, and the controller 120 may be implemented as a Software Defined Networking (SDN) controller (e.g., ONOS). Hereinafter, it is assumed that the controller 120 is an SDN controller.

According to an embodiment, the controller 120 may communicate with the cloud server 1 (see FIG. 1) and/or the plurality of connection modules 110a to 110h. For example, the controller 120 may receive data related to the battery pack collected from the sensors included in the plurality of connection modules 110a to 110h and/or provide the cloud server 1 with the received data related to the battery pack.

According to an embodiment, the sensors 111 may be connected wiredly and/or wirelessly (e.g., LAN cable, WIFI, optical communication, SIM LTE, 5G).

According to an embodiment, the controller 120 may be configured to control the sensor 111 operating based on the Linux operating system. Here, the controller 120 may communicate with the plurality of connection modules 110a to 110h based on an OpenFlow communication protocol to control the sensor included in each of the plurality of connection modules 110a to 110h. The OpenFlow communication protocol may correspond to the SDN protocol in which the controller 120 defines a path of a network packet through a switch network. That is, the sensor 111 operating based on the Linux operating system may be configured to be virtualized as a virtual switch (OpenVSwitch) and perform the function of a network switch between the controller 120 and the connection module 110a.

According to an embodiment, the controller 120 may control to turn off a sensor 111 corresponding to a connection module, of which the connection is to be restricted, on the basis of the connection state between the connection module 110a and the battery pack (not shown). In this case, the connection module 110a, of which the connection is to be restricted, and the battery pack connected thereto may not be provided to the user. For example, the controller 120 may be configured to turn off the connection to a sensor corresponding to a connection module, of which the connection is desired to be restricted, in correspondence to a failure state, or to turn off the connection to a sensor, of which the connection is desired to be restricted due to inspection or the like.

According to an embodiment, each of the plurality of connection modules 110a to 110h may be defined as various states on the basis of the presence or absence of a connected battery pack, the charging state of the connected battery pack, and/or the state of the battery pack. For example, a normal state may correspond to a state in which a battery pack is connected to a connection module and the battery pack is fully charged, a rented state may correspond to a state in which a battery pack is provided to the user and the battery pack is not connected to a connection module, a fault state may correspond to a state in which a battery pack is connected to a connection module, but a fault has occurred in the connection module and/or the battery pack connected to the connection module, and a charging state may correspond to a state in which a battery pack is connected to a connection module, but the battery pack is being charged.

As an example of the various states described above, referring to FIG. 3, the battery swapping station 10a may be in a state in which two battery packs are connected to connection modules and fully charged, two battery packs are not connected to connection modules as they are provided to the users, and four connection modules and/or battery packs connected to the four connection modules are in a fault state.

In the same manner, the battery swapping station 10b may be in a state in which eight battery packs are provided to the users and no battery pack is connected to any one of the connection modules, and the battery swapping station 10c may correspond to a state in which battery packs are connected to five connection modules, but the battery packs are being charged, may correspond to a state in which a battery pack is connected to one connection module and the battery pack is fully charged, may be in a state in which one battery pack is provided to the user and not connected to a connection module, and may be in a state in which one connection module and/or a battery pack connected to one connection module is in a fault state.

Referring to FIG. 2 again, the controller 120 may be configured to provide a plurality of users with a rental priority of battery packs. For example, the controller 120 may be configured to provide a priority related to which battery pack will be provided first to a user who desires to receive a battery pack from the battery swapping station 10 on the basis of the data related to the battery pack described above. For example, the controller 120 may be configured to provide the same priority to a plurality of users by providing data related to the battery pack and a rental priority calculated on the basis of the data related to the battery pack to the cloud server 1.

For example, when the controller 120 calculates a rental priority on the basis of data related to battery packs connected to the battery swapping station 10a (see FIG. 3), the controller 120 may determine a priority to preferentially rent a battery pack in a normal state among a plurality of battery packs connected to the battery swapping station 10a to the user.

As another example, when the controller 120 calculates a rental priority on the basis of the data related to the battery packs connected to the battery swapping station 10c (see FIG. 3), the controller 120 may determine the priority to rent a battery pack in a normal state among a plurality of battery packs connected to the battery swapping station 10c to the user. In addition, when a battery pack in a normal state is rented to the user, the controller 120 may determine a battery pack expected to reach a normal state first to be rented next considering the charging state of a plurality of battery packs in a state being charged.

According to an embodiment, the controller 120 may transmit data and a state related to the battery pack connected to the connection module 110a to the cloud server 1 whenever the state of the connection module 110a changes.

In an embodiment, the plurality of battery swapping stations 10a to 10c may be located in different areas.

According to an embodiment, data stored in the cloud server 1 may be provided to a user through a separate application linked to the cloud server 1 on the basis of a network function virtualization technique.

For example, a separate application linked to the cloud server 1 may provide the user with information related to the location of a battery swapping station near the user on the basis of location information of the user, and/or may provide the user with information related to the state of a plurality of connection modules included in each of a plurality of battery swapping stations near the user. In addition, the separate application linked to the cloud server 1 may provide the user with a priority calculated by a controller (not shown) included in a battery swapping station near the user. In addition, the separate application linked to the cloud server 1 may provide the user with the configurations included in the battery swapping station, such as information related to failure of battery packs, sensors, SDN controllers, or the like.

According to an embodiment, the separate application linked to the cloud server 1 may be configured to manage the network system and the controller 120 (see FIG. 2) included in the network system.

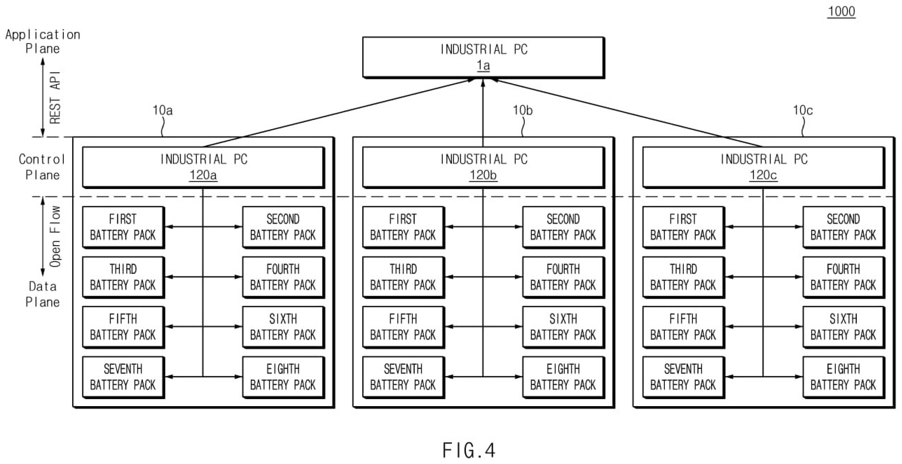

FIG. 4 is a view for explaining a network system according to an embodiment disclosed in this document.

Referring to FIG. 4, a plurality of layers constituting the network system 1000 is shown.

The network system 1000 may include a plurality of layers (planes). According to an embodiment, the network system 1000 may include a control plane, a data plane, and an application plane.

According to an embodiment, the data plane may be related to a plurality of battery packs (first to eighth battery packs) connected to the battery swapping stations 10a, 10b, and 10c. For example, it may be defined as an area where data related to a plurality of battery packs (first to eighth battery packs) connected to a plurality of connection modules 110a to 110h (see FIG. 2) is collected and transmitted to the control plane.

According to an embodiment, the control plane may be configured to identify a network path using a communication protocol. For example, the control plane may be implemented in the form of an industrial Personal Computer (PC) that controls each of the battery swapping stations 10a to 10c and the SDN controller 120 (see FIG. 2) installed in the industrial PC. As described above, the SDN controller 120 may identify a network path using the OpenFlow protocol and restrict connection to a sensor that is not desired to be connected. Here, the sensor may be a sensor the same as the sensor 111 that is virtualized as a virtual switch (OpenVSwitch) and operates based on the Linux operating system described above in the description of FIG. 2.

According to an embodiment, the application plane may be implemented in the form of an application that is linked to the cloud server 1 (see FIG. 3) and provides information related to the network system 1000 to the user. In addition, the application plane may correspond to a layer in which the user generates a command to be transmitted to the control plane.

In an embodiment, the application plane may communicate with other software systems, i.e., the control plane, on the basis of an interface such as a Representational State Transfer Application Interface (REST API).

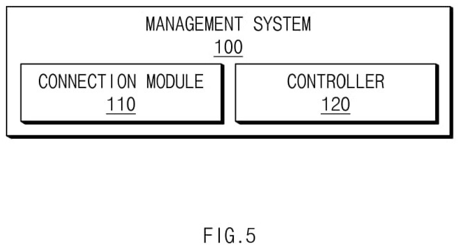

FIG. 5 is a view for explaining a management system according to an embodiment disclosed in this document.

Referring to FIG. 5, the management system 100 that manages the battery swapping station 10 (see FIG. 1) may include a connection module 110 and a controller 120.

As described above, according to an embodiment, the connection module may include at least one sensor (not shown). The sensor may be configured to collect data related to a battery pack (not shown) connected to the connection module.

As described above, the controller 120 may control the overall operation of the management system 100, as well as the battery swapping station 10 (see FIG. 1). According to an embodiment, the controller 120 may be implemented as a device such as an industrial computer that controls the overall operation of the battery swapping station 10, and the controller 120 may be implemented as a Software Defined Networking (SDN) controller (e.g., ONOS).

The management system 100 (see FIG. 5) according to an embodiment of the present invention, the battery swapping station 10 including the same, and a network system including the same are a Software Defined Network (SDN) system different from conventional network systems that control network traffic using hardware devices such as routers or switches, and may operate under the control of a software-based controller (SDN controller). Therefore, according to the network system disclosed in the present invention, communication with the battery swapping station may be performed based on lower cost and fewer resources compared to conventional network systems that require a lot of resources and costs. In addition, as the states of the battery swapping station and various configurations included therein are provided to the user in association with a cloud server, the battery swapping station may be monitored and/or controlled in real time.

As described above, although all the components constituting the embodiments have been described above as being combined as one piece or operating in combination, they are not necessarily limited to such embodiments, and within the scope of the objects, all the components may be selectively combined as one or more to operate. In addition, since the terms "include", "configure", "have", and the like described above mean that corresponding components may be included unless specifically stated to the contrary, it should be interpreted as including other components rather than excluding other components.

The above explanation only describes the technical spirit disclosed in this document as an example, and those skilled in the art in the art may make various changes and modifications without departing from the essential characteristics of the embodiments disclosed in this document.

Therefore, the embodiments disclosed in this document are not intended to limit but to explain the technical spirit disclosed in this document, and the scope of the technical spirit disclosed in this document is not limited by these embodiments. The protection scope of the technical spirit disclosed in this document should be interpreted by the claims provided below, and all technical spirits within the equivalent scope should be interpreted as being included in the scope of this document.

### [Description of symbols]

1: Cloud server
10: Battery swapping station
100: Management system
110: Connection module
120: Controller
1000: Network system

## Claims

1. A battery swapping station (BSS) management system comprising:
a connection module connected to a battery pack to monitor a state of the battery pack; and
a Software Defined Networking (SDN) controller configured to manage a connection state between the battery pack and the connection module on the basis of data related to the battery pack received from the connection module.

2. The battery swapping station management system according to claim 1, wherein the SDN controller communicates with the connection module based on an Open Flow communication protocol.

3. The battery swapping station management system according to claim 1, wherein the connection module includes a sensor that monitors the battery pack based on a Linux operating system, wherein the sensor is configured to be virtualized as a virtual switch (OpenVSwitch) and perform a network switch function between the connection module and the SDN controller.

4. The battery swapping station management system according to claim 3, wherein the SDN controller turns off a sensor corresponding to the connection module, of which the connection is to be restricted, on the basis of the connection state between the connection module and the battery pack.

5. The battery swapping station management system according to claim 3, wherein the SDN controller provides data related to the battery pack connected to the connection module to an external server.

6. The battery swapping station management system according to claim 5, wherein the data related to the battery pack includes data related to at least any one among whether the battery pack is connected, the number of times of charging the battery pack, the number of times of renting the battery pack, and a charging state of the battery pack.

7. The battery swapping station management system according to claim 5, wherein the SDN controller determines a priority of the battery pack to be rented to a user on the basis of the data related to the battery pack.

8. A network system comprising:
a management system configured to manage a connection state between a battery swapping station (BSS) and a battery pack connected to the battery swapping station; and
a cloud server configured to store data related to the battery pack provided by the management system, wherein
the management system includes a Software Defined Networking (SDN) controller.

9. The network system according to claim 8, wherein the SDN controller communicates with a connection module connecting the battery swapping station and the battery pack based on an OpenFlow protocol.

10. The network system according to claim 9, wherein the connection module includes a sensor that monitors the battery pack based on a Linux operating system, wherein the sensor is configured to be virtualized as a virtual switch (OpenVSwitch) and perform a network switch function between the connection module and the controller.

11. The network system according to claim 10, wherein the SDN controller turns off a sensor corresponding to the connection module, of which the connection is to be restricted, on the basis of the connection state between the connection module and the battery pack, and provides data related to the battery pack connected to the connection module to the cloud server.

12. The network system according to claim 11, wherein the data related to the battery pack includes data related to at least any one among whether the battery pack is connected, the number of times of charging the battery pack, the number of times of renting the battery pack, and a charging state of the battery pack.

13. The network system according to claim 12, wherein data related to the battery pack is provided to a user through an application (APP) linked to the cloud server.
